# FASCICULE DE BREVET EUROPEEN

(11) **EP 0 378 090 B1**
(45) Date de publication et mention de la délivrance du brevet: **03.03.1993**
(21) Numéro de dépôt: 90100076.0
(22) Date de dépôt: 03.01.1990
(51) Int. Cl.: B60C 11/12, B60C 11/11

(54) **Bande de roulement pour pneumatique destiné à des roulages hivernaux**
Lauffläche für Winterluftreifen
Tread for a pneumatic winter tyre

(30) Priorité: 10.01.1989 FR 8900302
(43) Date de publication de la demande: 18.07.1990
(73) Titulaire: COMPAGNIE GENERALE DES ETABLISSEMENTS MICHELIN - MICHELIN & CIE, 63040 Clermont-Ferrand Cédex (FR)
(72) Inventeur: Lagnier, Alain, F-63540 Romagnat (FR)
(74) Mandataire: Bauvir, Jacques

(56) Documents cités:
- EP-A- 0 282 765
- FR-A- 2 279 575
- FR-A- 2 444 576
- GB-A- 548 914
- LU-A- 58 967

## Description

L'invention concerne la bande de roulement d'un pneumatique routier, doté d'une armature de carcasse radiale et d'une armature de sommet, et plus particulièrement destiné à des roulages sur sols enneigés, verglacés ou mouillés.

Une telle bande de roulement est généralement formée d'éléments en relief (nervures ou blocs) séparés les uns des autres dans le sens circonférentiel et/ou dans le sens transversal par des rainures et pourvus de nombreuses incisions ou fentes, dont la largeur non nulle est très inférieure à la largeur des rainures circonférentielles et transversales qui délimitent les éléments en relief. La largeur d'une incision est généralement, variable en fonction de la dimension du pneumatique étudié, mais comprise entre 0,1 mm et 2 mm.

On peut utiliser des fentes ou incisions, normales à la surface de la bande de roulement. Cependant, l'amélioration de l'adhérence sur neige et glace, due à ces fentes normales disparaît en cours de vie de la bande de roulement. Afin de rémédier à ce problème, et ainsi de conférer au pneumatique une meilleure efficacité, soit sous couple moteur, soit sous couple freineur, et quelle que soit l'usure de la bande de roulement, le brevet FR 2 461 602 dote les éléments en relief des zones latérales de la bande de roulement d'incisions d'orientation sensiblement transversale sur la bande de roulement mais inclinées par rapport à la normale à la surface de la bande de roulement d'un angle au plus égal à 45° et dans le sens de rotation du pneumatique, et dote les éléments en relief de la zone médiane d'incisions inclinées dans le sens opposé au sens de rotation. La solution décrite impose un sens de rotation au pneumatique dont la bande de roulement est pourvue de telles incisions.

En vue de supprimer le sens de roulage imposé, et d'améliorer l'aspect de la bande de roulement sur usure, la demande française n° 2 612 129 décrit une bande de roulement comportant des blocs munis d'incisions en nombre pair, ces incisions présentant en section droite sur la totalité de leurs profondeurs des tracés en lignes brisées et dits "en opposition de phase".

Les deux solutions décrites ci-dessus, en vue de conférer au pneumatique la meilleure efficacité possible en adhérence longitudinale sur les sols considérés, sous couple moteur et/ou sous couple freineur, mettent en jeu un nombre important d'incisions et une modification en cours de roulage de la configuration des arêtes délimitant les lames de gomme comprises entre les incisions, le nombre d'arêtes restant constant en fonction du taux d'usure.

Quel que soit le tracé radial des incisions, une déchéance sensible de l'adhérence sur les sols considérés apparaît à partir d'un certain taux d'usure de la bande de roulement compris entre 30 et 55 %. Ce phénomène est particulièrement apparent sur les pneumatiques à carcasse radiale, dont la bande de roulement est stabilisée par une armature peu déformable.

Cette déchéance est perçue par l'utilisateur d'autant plus rapidement que le nombre d'incisions sur la bande de roulement est important, ce nombre d'incisions étant alors la cause d'une vitesse d'usure élevée de la bande de roulement, accentuée par ailleurs par le choix délibéré de tracés radiaux d'incisions provoquant des usures irrégulières et auto entretenues des lames de gommes délimitées par les incisions. Cette vitesse d'usure fait en sorte que le taux d'usure cité ci-dessus est atteint au bout d'un kilométrage qui est sans aucun doute faible par rapport au kilométrage atteint par un pneumatique normal, c'est-à-dire non fortement incisé, pour le même taux d'usure. Le document LU-A-58 967 décrit une bande selon le préambule de la revendication 1, pour éviter que des pierres soient retenues dans les fentes du pneu.

Le problème à la base de l'invention est de remédier en premier lieu à la déchéance de l'adhérence sur les sols considérés en cours de durée de vie du pneumatique, et en second lieu de diminuer la vitesse d'usure de la bande de roulement, tout en conservant une bonne adhérence du pneumatique sur les sols considérés.

Le principe de solution conforme à l'invention consiste à munir en partie la bande de roulement du pneumatique, d'incisions présentant en section droite des tracés en forme de fourches à au moins deux branches, selon les caractéristiques de le revendication 1.

Les incisions, conformes à l'invention, peuvent présenter en section droite des formes différentes en particulier suivant le facteur de multiplication des arêtes, ou suivant leur disposition sur l'élément en relief.

Dans le cas où le facteur de multiplication des arêtes désiré est important, il est avantageux d'utiliser des incisions à trois branches, une des branches étant le prolongement de la première partie, et les deux autres branches étant disposées de part et d'autre du plan médian de la partie rectiligne et préférentiellement de façon symétrique.

Si l'on considère la durée de vie du pneumatique sur usure, l'adhérence de celui-ci sur les sols considérés, et son comportement routier (tenue de route en virage, stabilité en ligne droite, bruit engendré par le roulage), le meilleur compromis de ces performances est obtenu par l'utilisation d'incisions à deux branches, ces deux branches étant disposées soit de part et d'autre du plan médian de la première partie rectiligne de l'incision, de façon symétrique ou asymétrique, soit l'une des branches étant disposée d'un côté du plan médian de la première partie, l'autre branche étant le prolongement de cette première partie. La première configuration est avantageuse lorsque l'incision n'est pas disposée directement près d'une rainure. Par contre dans le cas contraire, c'est-à-dire le cas où l'incision est placée près d'une rainure, la deuxième configuration présente l'avantage de prendre en compte l'inclinaison de la paroi de la rainure, et ainsi de maîtriser la largeur de la lame délimitée par la paroi de la rainure et l'incision.

Dans le cas d'incisions dites à deux branches, situées de part et d'autre du plan médian de la première partie de l'incision, les deux branches peuvent présenter soit la forme générale d'un U, soit la forme générale d'un V. Dans le premier cas, les deux branches ont en majeure partie des tracés parallèles au tracé de la première partie, et parallèles entre eux, ces tracés parallèles étant alors réunis au tracé de la première partie rectiligne de l'incison par des portions de raccordement courbes. Dans le deuxième cas, les deux branches sont rectilignes et forment avec le plan médian de la première partie de l'incision des angles compris entre 0° et 20°.

Les caractéristiques et avantages de la présente invention seront mieux compris à l'aide de la description qui suit et qui se réfère au dessin illustrant à titre non limitatif des exemples d'exécution :
- la figure 1 est une vue en plan, non représentée à l'échelle, d'une bande de roulement comportant des incisions conformes à l'invention,

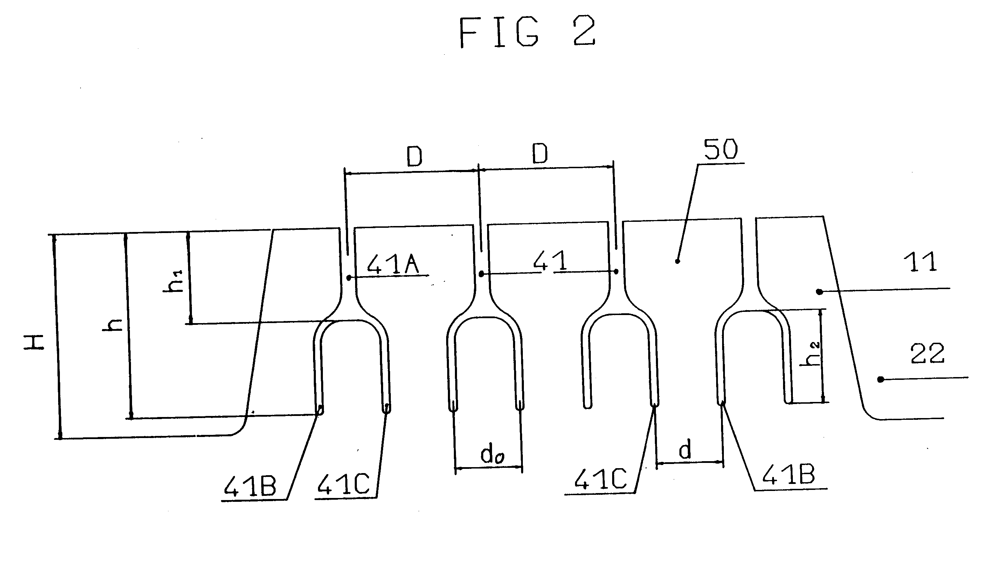

- la figure 2 est une vue détaillée, non représentée à l'échelle, sur le plan de coupe suivant la ligne AA de la figure 1,
- les figures 3A, 3B, 3C et 3D sont des vues détaillées et agrandies en section droite d'incisions conformes à l'invention,

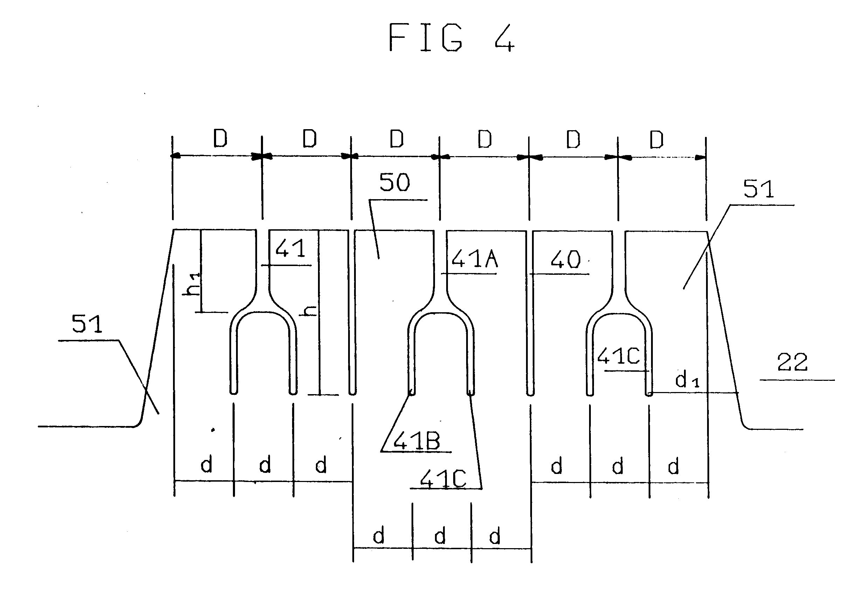

- la figure 4 est une vue détaillée, non représentée à l'échelle, d'un élément en relief vu en section droite, suivant une variante d'exécution montrant à titre d'exemple l'utilisation d'incisions conformes à la figure 3A, en combinaison avec des incisions normales.

La portion de bande de roulement (1) d'un pneumatique 175R14X, représentée sur la figure (1), comporte dans la région centrale des éléments en relief ou blocs (11) séparés entre eux par des rainures circonférentielles (21) et des rainures transversales (22), rainures dont la largeur est généralement comprise entre 3 mm et 7 mm. Les bords latéraux de la bande de roulement sont formés d'éléments en relief (13) séparés dans le sens circonférentiel par des rainures (23).

Les blocs (11), (13) sont pourvus d'incisions (41) (42) (43) présentant sur la surface de la bande de roulement (1) des tracés rectilignes avec, dans chaque élément en relief, des orientations parallèles entre elles. Sont considérées comme étant parallèles entre elles des orientations différentes d'un angle au plus égal à 10°. Les incisions (41) des éléments en relief (11) des deux rangées centrales axialement internes sont sensiblement transversales. Il en est de même des incisions (43) des éléments en relief (13) des parties latérales de la bande de roulement (1), alors que les incisions (42) des éléments en relief (11) des deux rangées centrales axialement externes sont circonférentielles. Les incisions utilisées sont de trois sortes : les incisions (41) prennent naissance à l'intérieur de l'élément en relief pour ne déboucher que sur une seule rainure et ont une longueur moyenne axiale (1), les incisions (42) débouchent sur les deux rainures sensiblement parallèles délimitant dans le sens circonférentiel l'élément en relief (11) et ont une longueur moyenne (1′). Quant aux éléments en relief (13), ils comportent des incisions (43) dont certaines ne débouchent pas sur des rainures.

Sur la figure (2) apparaissent les tracés respectifs en section droite de quatre incisions (41) d'un bloc (11) d'une rangée centrale de la bande de roulement. Ces incisions (41) sont identiques entre elles, elles ont la même profondeur (h), pouvant être comprise entre 0,6 H et 1,5 H, H étant la profondeur des rainures (22) délimitant l'élément en relief (11) considéré. Chaque incision (41) présente, en partant de la surface de la bande de roulement (1), une première partie rectiligne (41A), perpendiculaire à la surface de la bande de roulement, et de largeur (e) égale à 0,8 mm. Cette largeur (e) est fonction de la dimension du pneumatique et principalement du nombre d'incisions (41) présentes sur la surface de l'élément en relief, et est généralement comprise entre 0,4 et 1,6 mm. La première partie (41A) s'étend radialement sur une profondeur h₁, comprise entre 0,30 et 0,55 h. Cette partie rectiligne est prolongée par deux branches ou segments (41B) (41c) de largeur 0,4 mm, c'est-à-dire de largeur e/2, qui s'étendent radialement sur une profondeur (h₂), complément de (h₁) pour donner la hauteur totale (h) de l'incision.

Ces incisions (41) sont séparées, sur la surface de l'élément en relief (11), d'une distance (D), mesurée entre les axes de deux incisions voisines, et sont disposées sur l'élément en relief de sorte que la distance (dₒ) séparant les 2 branches d'une incision soit égale d'une part à la distance (d) séparant une branche (41C) d'une incision (41) de la branche (41B) de l'incision voisine et d'autre part à la moitié de la distance (D).

Comme montré clairement sur la figure (2) l'invention permet dans ce cas de multiplier par 2 le nombre d'arêtes des lames (50), à partir de la profondeur h₁, égale à 45 % de la profondeur h. Cette multiplication du nombre d'arêtes permet de compenser la déchéance en adhérence, sur les sols considérés, qu'aurait subi un pneumatique dont les blocs de la bande de roulement auraient été pourvus d'incisions droites, délimitant des lames de largeur (D) déchéance dont la cause est la perte de mobilité des lames de gomme, la mobilité d'une lame étant d'autant plus faible que sa hauteur est plus faible.

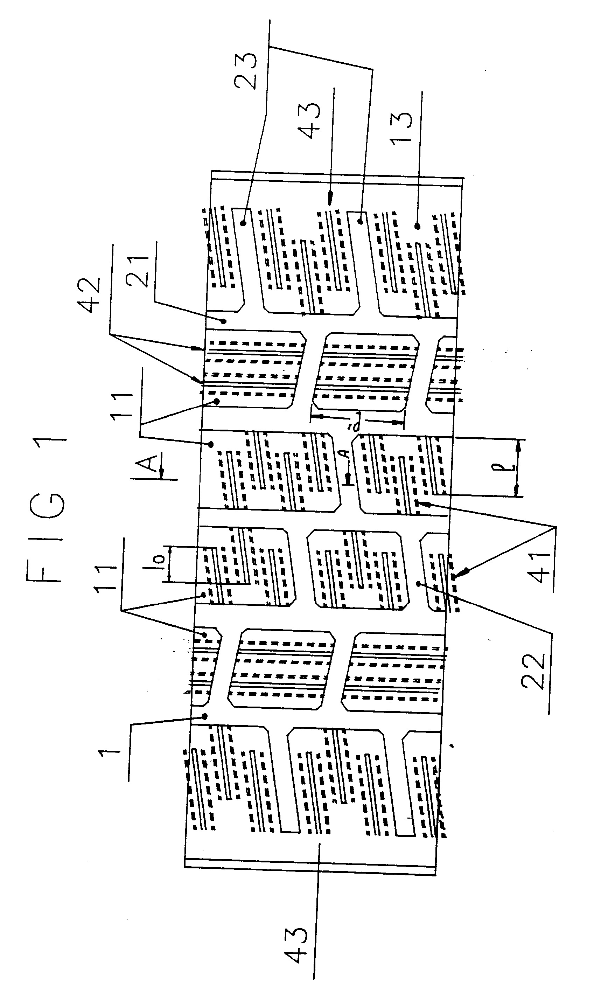

La figure (2) permet aussi de comprendre un autre avantage de l'invention. L'emploi d'incisions, conformes à l'invention, confère à une lame de gomme (50) délimitée par deux incisions voisines (41) une forme, telle que la surface d'ancrage de la lame (50) à sa base, (au niveau des extrémités radialement intérieures des incisions), produit de la distance (d) par la longueur (lo) (figure 1) sur laquelle se font face les deux incisions voisines (41) est nettement plus petite que la surface de la lame en contact avec le sol, produit de la distance (D) par la même longueur (lo). Dans le cas montré, cette surface de contact est égale à deux fois la surface d'ancrage. Cette forme particulière combinée à une largeur d'incision (e) non nulle, confère à la lame (50) une mobilité très supérieure à la mobilité qu'aurait une lame normale, délimitée pour deux incisions rectilignes sur toute la profondeur, et en conséquence une efficacité des arêtes sur les sols considérés supérieure. L'invention permet ainsi la diminution du nombre d'incisions sur la surface de la bande de roulement pour un niveau d'adhérence donné, et en conséquence une diminution sensible de la vitesse d'usure des lames (50) jusqu'à la profondeur h₁. C'est ainsi qu'un pneumatique dont la bande de roulement est munie de blocs comportant tous cinq incisions de largeur 0,4 mm, le tracé de chaque incision étant rectiligne et perpendiculaire à la surface de la bande de roulement sur toute la profondeur (h) est avantageusement remplacé par un pneumatique identique en tous points au précédent, excepté que les blocs sont pourvus de trois incisions conformes à l'invention, de largeur 0,8 mm, la hauteur h₁ étant égale à 45 % de la hauteur h.

Les tests d'adhérence longitudinale et d'usure effectués sur véhicule (4 pneumatiques identiques) mettent en évidence une perte d'adhérence d'environ 5 %, perte jugée peu significative en fonction de la dispersion inhérente à de tels tests globaux (mesure des distances d'arrêt d'un véhicule les 4 roues étant bloquées), alors que le gain en usure, mesuré par la perte du poids en g/km s'élève à environ 13 % en moyenne sur les pneumatiques moteurs, c'est-à-dire les pneumatiques les plus sensibles à l'usure.

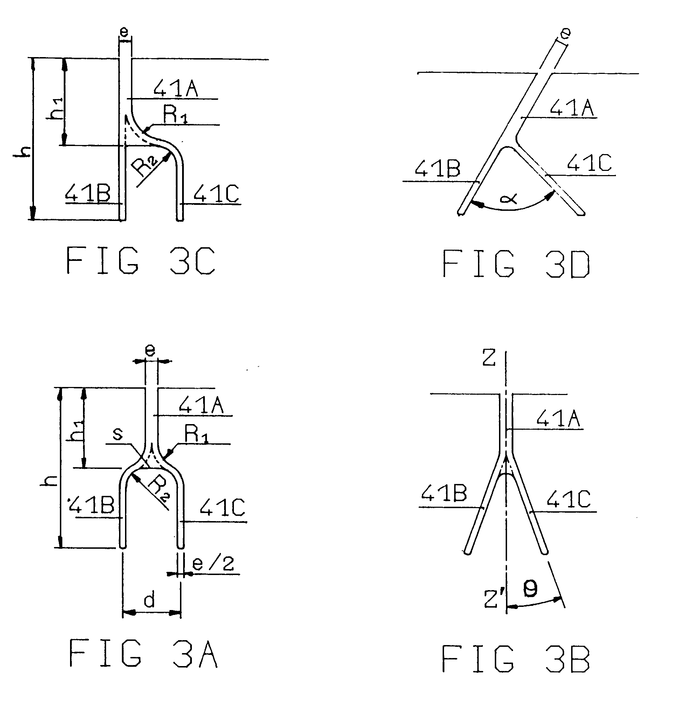

La figure 3 A est une vue détaillée d'une incision, employée dans le bloc de la figure (2). L'incision (41) a deux branches (41B, 41C) qui prolongent la première partie rectiligne (41A) sous la forme d'un U inversé. La forme du U, pris en lui-même, ainsi que la forme de raccordement des deux branches (41B, 41C) à la partie unique (41A) peuvent être variables, plus particulièrement en fonction du mode d'obtention des inserts métalliques qui, ancrés dans le moule de vulcanisation, formeront par moulage les incisions dans la bande de roulement.

Si ces inserts sont obtenus par moulage, injection ou usinage, la base intérieure du U a la forme d'un demi-cercle de rayon R, au plus égal à 1,5 mm, la distance (do) séparant les deux branches (41B, 41C) étant au plus égale à 3 mm, pour faciliter le démoulage du pneumatique hors du moule de cuisson. Cette base peut aussi être formée de deux quarts de cercle de rayon R₂, inférieur à Rₒ, réunis par un segment de droite (S).

Si ces inserts sont obtenus par assemblage de deux parties métalliques conformées, la base intérieure du U est alors pointue (pointillés de la figure 3A).

Quant à la forme de raccordement des parois extérieures de l'insert, elle se présente sous la forme d'un arc de cercle de rayon R₁, au moins égal à 1,5 fois la largeur e/2.

La figure 3 B est une variante possible d'une incision conforme à l'invention, caractérisée en ce que les deux branches (41B) et (41C) sont rectilignes, symétriques par rapport au plan médian ZZ′, de la première partie rectiligne (41A) et font avec ce plan médian un angle ϑ au plus égal à 20°. Du fait de l'inclinaison des deux branches (41B) et (41C), ce type d'incisions permet, à partir de la hauteur (h₁), de provoquer des usures irrégulières des lames de gomme, et en conséquence d'augmenter si nécessaire l'efficacité des arêtes des lames sur les sols considérés. Comme montrées sur les figures 3 C et 3D, des incisions ne comportant que 2 branches peuvent être telles que l'une des branches (41B, 41C) soit le prolongement rectiligne de la première partie (41A). Dans le cas de la figure (3D) où les deux branches (41B, 41C) forment un V, l'angle α formé par ces deux branches est au plus égal à 40°.

Bien que l'invention concerne fondamentalement des incisions à au moins deux branches à partir d'une certaine profondeur, on ne sort pas du cadre de l'invention en utilisant de telles incisions associées à d'autres incisions de type différent, soit sur un même élément en relief, soit sur différents éléments en fonction de leur position sur la bande de roulement. Sur un même élément en relief, les incisions conformes à l'invention peuvent être combinées par exemple, à des incisions simples rectilignes, comme le montre la figure (4). Une telle combinaison est formée de trois incisions (41) conformes à l'invention et de deux incisions (40) rectilignes sur toute la profondeur (h), commune aux cinq incisions. Une telle solution permet, tout en obtenant une distance (d) entre incisions à la base de celles-ci constante et égale dans ce cas à 2D/3, de rendre la distance (d₁) comprise entre la paroi d'une rainure de délimitation (22) et l'incision (41C) la plus proche de cette rainure, peu différente de d. Les deux lames (51) ont alors une mobilité comparable aux lames (50) entre deux incisions voisines, d'où une usure plus régulière, lorsque le nombre d'incisions est devenu supérieur (8 au lieu de 5).

De la même manière, les éléments en relief des bords de la bande de roulement seront pourvus d'incisions soit conformes à l'invention, soit rectilignes inclinées, alors que les éléments en relief du centre de la bande de roulement sont pourvus d'incisions soit inclinées et rectilignes, soit conformes à l'invention, le choix de combinaison étant guidé par l'adhérence désirée, soit d'une adhérence améliorée sous couple moteur, soit améliorée sous couple freineur.

## Revendications

1. Bande de roulement, pour pneumatique à armature de carcasse radiale surmontée d'une armature de sommet plus particulièrement destiné à des roulages sur sols mouillés, enneigés ou verglacés, formée au moins d'éléments en relief, séparés par des rainures, et pourvus d'incisions, présentant sur la surface de bande de roulement des tracés de largeur e non nulle, les éléments en relief (11, 13) incisés étant pourvus au moins d'incisions (41, 42, 43) présentant en section droite un tracé, formé d'une première partie rectiligne (41A) de largeur e, s'étendant radialement à l'intérieur sur une profondeur h₁ cette première partie (41A) se divisant en au moins deux branches ou segments (41B, 41C) s'étendant radialement à l'intérieur sur la profondeur restante (h-h₁), caractérisée en ce que la largeur e des tracés est comprise entre 0,4 et 1,6 mm, la profondeur h₁ est comprise entre 35 % et 55 % de la profondeur totale h du tracé, la largeur des branches ou segments (41B, 41C) est e/2, la longueur (l, l′) sur la surface de la bande de roulement (1) d'une incision (41, 42, 43) restant constante en fonction de la profondeur totale h du tracé, le nombre d'incisions sur l'élément en relief (11, 13) étant multiplié par un coefficient au moins égal à 1,5 à partir de la profondeur h₁.

2. Bande de roulement, selon la revendication 1, caractérisée en ce que les éléments en relief incisés (11, 13) ne comportent que des incisions (41) à deux branches, la distance (dₒ) séparant les deux branches (41B, 41C) d'une incision (41) étant d'une part égale à la distance (d) séparant la branche (41C) d'une incision (41) de la branche (41B) de l'incision (41) voisine, et d'autre part égale à la moitié de la distance (D) séparant sur la surface de la bande de roulement (1) deux incisions voisines (41A).

3. Bande de roulement selon la revendication 1, caractérisée en ce que les éléments en relief (11, 13) incisés comportent des incisions (41) à deux branches et des incisions (40) rectilignes, ces incisions (40 et 41) étant disposées sur l'élément en relief (11, 13) de sorte que la distance (d) séparant les incisions (41B, 41C, 40) existantes à partir de la profondeur (h₁) soit égale aux deux tiers de la distance (D) séparant les incisions (41A) et (40) sur la surface de la bande de roulement (1).

4. Bande de roulement selon la revendication 1, caractérisée en ce que les incisions (41) ont deux branches (41B, 41C), parallèles à la première partie (41A), disposées symétriquement de part et d'autre du plan médian (P) de la première partie (41A) et réunies à cette même partie (41A) par des portions de raccordement curvilignes.

5. Bande de roulement selon la revendication 1, caractérisée en ce que les incisions (41) ont deux branches (41B, 41C) rectilignes, disposées symétriquement de part et d'autre du plan médian (P) de la première partie (41A) en faisant avec ce plan (P) un angle Θ au plus égal à 20°.

6. Bande de roulement selon la revendication 1, caractérisée en ce que les incisions (41) ont deux branches (41B, 41C), l'une des branches (41B, 41C) étant le prolongement rectiligne de la première partie (41A), l'autre branche (41B, 41C) étant soit parallèle à la première partie (41A) et réunie à celle-ci par des portions de raccordement curvilignes, soit rectiligne en faisant un angle (α) avec la partie rectiligne de la première partie (41A) d'au plus 40°.

7. Pneumatique, caractérisé en ce qu'il comporte une bande de roulement selon l'une des revendications 1 à 6.

## Patentansprüche

1. Lauffläche für Luftreifen mit Gürtelreifenkarkassenbewehrung, überzogen mit einer Kronenbewehrung, insbesondere dazu bestimmt, auf nassen, verschneiten oder vereisten Böden zu rollen, wenigstens gebildet aus Reliefelementen, die von Rillen getrennt sind, und versehen mit Einschnitten, die auf der Laufflächenoberfläche Bahnen von einer Breite e ungleich Null aufweist, wobei die eingeschnittenen Reliefelemente (11, 13) wenigstens versehen sind mit Einschnitten (41, 42, 43), die im Querschnitt eine Bahn aufweisen, die von einem ersten geradlinigen Bereich (41A) von der Breite e gebildet wird, der sich radial im Inneren Üer eine Tiefe h₁ erstreckt, wobei der erste Bereich (41) sich in wenigstens zwei Arme oder Segmente (41B, 41C) aufteilt, die sich radial im Irreren auf der verbleibenden Tiefe (h - h₁) erstrecken,
**dadurch gekennzeichnet,**
daß die Breite e der Bahnen zwischen 0,4 mm und 1,6 mm liegt, die Tiefe h₁ zwischen 35 % und 55 % der gesamten Tiefe h der Bahn oder Trasse beträgt, die Breite der Arme oder Segmente (41B, 41C) gleich e/2 beträgt, die Länge (1, 1′) an der Oberfläche der Lauffläche (1) eines Einschnitts (41, 42, 43) konstant in Abhängigkeit der Gesamttiefe h der Bahn oder Trasse bleibt und die Anzahl der Einschnitte an dem Reliefelement (11, 13) multipliziert wird durch einen Koeffizienten, der wenigstens gleich 1,5 ausgehend von der Tiefe h₁ ist.

2. Lauffläche nach Anspruch 1, **dadurch gekennzeichnet,** daß die eingeschnittenen Reliefelemente (11, 13) nur Einschnitte (41) mit zwei Armen aufweisen, wobei der Abstand (dₒ), der die beiden Armen (41B, 41C) eines Einschnitts (41) trennt, einerseits gleich dem Abstand (d) ist, der den Arm (41C) eines Einschnitts (41) von dem Arm (41B) des benachbarten Einschnitts (41) trennt, und andererseits gleich der Hälfte des Abstands (D) ist, der auf der Oberfläche der Lauffläche (1) zwei benachbarte Einschnitte (41A) trennt.

3. Lauffläche nach Anspruch 1, **dadurch gekennzeichnet,** daß die eingeschnittenen Reliefelemente (11, 13) Einschnitte (41) mit zwei Armen und Einschnitte (40), die geradlinig sind, aufweisen, wobei diese Einschnitte (40 und 41) auf dem Reliefelement (11, 13) derart angeordnet sind, daß der Abstand (d), der die bestehenden Einschnitte (41B, 41C, 40) trennt, ausgehend von der Tiefe (h₁) gleich zwei Drittel des Abstands (D) ist, der die Einschnitte (41A) und (40) an der Oberiläche der Lauffläche (1) trennt.

4. Lauffläche nach Anspruch 1, **dadurch gekennzeichnet,** daß die Einschnitte (41) zwei Arme (41B, 41C) aufweisen, die parallel zum ersten Bereich (41A) verlaufen, die symmetrisch beiderseits der Mittenebene (P) des ersten Bereichs (41A) angeordnet sind und mit diesem Bereich (41A) durch gebogene Verbindungsabschnitte verbunden sind.

5. Lauffläche nach Anspruch 1, **dadurch gekennzeichnet,** daß die Einschnitte (41) zwei geradlinige Arme (41B, 41C) aufweisen, die symmetrisch beiderseits der Mittenebene (P) des ersten Bereichs (41A) angeordnet sind, wobei sie mit dieser Ebene (P) einen Winkel Θ bilden, der höchstens gleich 20° ist.

6. Lauffläche nach Anspruch 1, **dadurch gekennzeichnet,** daß die Einschnitte (41) zwei Arme (41B, 41C) aufweisen, wobei einer der Arme (41B, 41C) die geradlinige Verlängerung des ersten Bereichs (41A) ist, wobei der andere Arm (41B, 41C) entweder parallel zum ersten Bereich (41A) und verbunden mit diesem durch gebogene Verbindungsabschnitte verbunden ist, oder geradlinig ist, unter Bildung eines Winkels (α) mit dem geradlinigen Bereich des ersten Bereichs (41A) von höchstens 40°.

7. Luftreifen, **dadurch gekennzeichnet,** daß er eine Lauffläche nach einem der Ansprüche 1 bis 6 aufweist.

## Claims

1. A tread for a tyre with radial carcass reinforcement surmounted by a tread reinforcement, more particularly intended for travel on wet, snow-covered or icy ground, formed at least of elements in relief separated by grooves and provided with incisions, having on the surface of the tread outlines of a width e other than zero, the cut elements in relief (11, 13) being provided at least with incisions (41, 42, 43) having in cross-section an outline formed of a first rectilinear part (41A) of width e extending radially inwardly over a depth h₁, this first part (41A) being divided into at least two branches or segments (41B, 41C) extending radially inwards over the remaining depth (h-h₁), characterised in that the width of the traces is of between 0.4 and 1.6 mm, the depth h₁ is between 35% and 55% of the total depth h of the outline, the width of the branches or segments (41B, 41C) is e/2, the length (1, 1′) of an incision (41, 42, 43) on the surface of the tread (1) remaining constant as a function of the total depth h of the outline, the number of incisions on the element in relief (11, 13) being multiplied by a factor at least equal to 1.5 starting from the depth h₁.

2. A tread according to Claim 1, characterised in that the cut elements in relief (11, 13) have only double-branch incisions (41), the distance (dₒ) between the two branches (41B, 41C) of an incision (41) being, on the one hand, equal to the distance (d) between the branch (41C) of one incision (41) and the branch (41B) of the neighbouring incision (41), and, on the other hand, equal to half the distance (D) between two neighbouring incisions (41A) on the surface of the tread (1).

3. A tread according to Claim 1, characterised in that the cut elements in relief (11, 13) have double-branch incisions (41) and rectilinear incisions (40), these incisions (40 and 41) being arranged on the element in relief (11 and 13) in such a manner that the distance (d) between the incisions (41B, 41C, 40) present as from the depth (h₁) is equal to two-thirds of the distance (D) between the incisions (41A) and (40) on the surface of the tread (1).

4. A tread according to Claim 1, characterised in that the incisions (41) have two branches (41B, 41C) parallel to the first part (41A) and arranged symmetrically on both sides of the median plane (P) of the first part (41A), and connected to said part (41A) by curved connecting portions.

5. A tread according to Claim 1, characterised in that the incisions (41) have two rectilinear branches (41B, 41C) arranged symmetrically on both sides of the median plane (P) of the first part (41A), forming an angle Θ of at most 20° with said plane (P).

6. A tread according to Claim 1, characterised in that the incisions (41) have two branches (41B, 41C), one of the branches (41B, 41C) being the rectilinear extension of the first part (41A), the other branch (41B, 41C) being either parallel to the first part (41A) and connected to it by curved connecting portions, or rectilinear, forming an angle (α) of at most 40° with the rectilinear portion of the first part (41A).

7. A tyre, characterised in that it has a tread according to one of Claims 1 to 6.
